# EUROPÄISCHE PATENTSCHRIFT

(11) **EP 0 885 649 B1**
(45) Veröffentlichungstag und Bekanntmachung des Hinweises auf die Patenterteilung: **29.12.2004**
(21) Anmeldenummer: 98110853.3
(22) Anmeldetag: 13.06.1998
(51) Int. Cl.: B01D 53/86, F23J 15/00, B01D 53/56

(54) **Verfahren zur Entstickung von Verbrennungsabgasen**
Process for the denitration of combustion exhaust gases
Procédé et dispositif pour la dénitration de gaz d'échappement provenant de la combustion

(30) Priorität: 20.06.1997 CH 150697
(43) Veröffentlichungstag der Anmeldung: 23.12.1998
(73) Patentinhaber: Von Roll Umwelttechnik AG, 8005 Zürich (CH)
(72) Erfinder: Frey, Rudolf, 8307 Effretikon (CH); Koller, Felix, 5106 Veltheim (CH)
(74) Vertreter: Patentanwälte Schaad, Balass, Menzl & Partner AG

(56) Entgegenhaltungen:
- EP-A- 0 253 563
- DE-A- 3 517 992
- DE-A- 3 634 360
- DE-A- 3 941 894
- US-A- 4 925 633
- US-A- 5 233 934
- US-A- 5 286 467
- US-A- 5 465 690

## Beschreibung

Die Erfindung betrifft ein Verfahren zur Entstickung von Verbrennungsabgasen einer Müllverbrennungsanlage bei welcher der Verbrennungvorgang zweistufig abläuft, mit einer Hauptverbrennung und einer Nachverbrennung.

Es ist bekannt den Verbrennungsabgasen zur Entstickung Ammoniak zuzuführen, wobei die Stickoxide bei einer Temperatur von etwa 850 °C mit Ammoniak unter Bildung von Stickstoff und Wasser reagieren. Dieses Verfahren weist den Nachteil auf, dass bei hohen Entstickungswirkungsgraden ein hoher Ammoniak-Schlupf auftritt. Ein weiterer Nachteil ist der relativ hohe Ammoniak-Verbrauch.

Aus der DE 36 34 360 C2 ist ein weiteres Verfahren zur Entstickung von Verbrennungsabgasen bekannt, bei welchem die Abgase mit NH3, amoniakhaltigen Substanzen, Aminen oder aminhaltigen Substanzen gemischt werden und dann bei einer Temperatur von 150 bis 600°C durch mindestens ein Filterelement geleitet werden, das aus einem keramischen Trägermaterial besteht und katalytisch wirksame Substanzen aufweist, welche die Reduktion von Stickoxiden katalysieren. Falls die Verbrennungsabgase eine hohe Schadstoffbelastung aufweisen, wie dies zum Beispiel bei in einer Müllverbrennung anfallenden Abgasen zutrifft, lässt sich dieses Verfahren nicht oder nur unter Inkaufnahme einer sehr beschränkten Lebensdauer der Katalysatoren einsetzen. Der Betrieb eines derartigen Verfahrens ist, wenn überhaupt möglich, sehr kostenaufwendig. Ein weiterer Nachteil dieses Verfahrens ist darin zu sehen, dass auf Grund der hohen Temperatur der Oberfläche der Katalysatoren von bis zu 600°C viel Dioxin gebildet wird.

In US 5,286,467 wird ein Verfahren zur Reduktion von Stickstoffoxiden aus Rauchgasen beschrieben, die bei der Verbrennung von organischem Material entstehen. Das Verfahren umfasst dabei eine erste NOₓ-Reduktion mit Harnstoff und anderen Ammoniak abspaltenden Verbindungen und eine zweite NOₓ-Reduktion mit einem Katalysator.

Es ist Aufgabe der vorliegenden Erfindung ein wirkungsvolleres und kostengünstigeres Verfahren zur Entstickung von Verbrennungsabgasen vorzuschlagen.

Diese Aufgabe wird gelöst mit einem Verfahren aufweisend die Merkmale von Anspruch 1. Die Unteransprüche 2 bis 8 beziehen sich auf weitere, vorteilhafte Ausgestaltungen des Verfahrens.

Das erfindungsgemässe Verfahren weist den Vorteil auf, dass die Katalysatoren über einen langen Zeitraum funktionsfähig sind und daher nicht ersetzt werden müssen, was einen kostengünstigen und hinsichtlich der Katalysatoren weitgehend unterbruchsfreien Betrieb der Abgasreinigungsvorrichtung ermöglicht.

In einer vorteilhaften Ausführungsform umfasst das Katalysatorelement zudem ein Filterelement, wobei diese beiden Element auch als ein katalytische Substanzen aufweisendes Filterelement ausgestaltet sein können, wie dies beispielsweise aus der Druckschrift DE 36 34 360 C2 bekannt ist. In einer vorteilhaften Ausführungsform wird als Filterelement eine Katalysator-Filterkerze verwendet.

Ein weiterer Vorteil des erfindungsgemässen Verfahrens ist darin zu sehen, dass der Katalysator-Filter bzw. die Katalysator-Filterkerze in relativ kleiner und kompakter Bauweise ausgestaltet werden kann. Bekannterweise nimmt die Wirksamkeit eines Katalysators mit der Zeit ab. In Anlagen, welche zur Entstickung ausschliesslich einen Katalysator verwenden, wird dieser beispielsweise für eine Betriebsdauer von zwei Jahren ausgelegt, und muss daher entsprechend gross gebaut sein, um auch gegen Ende der vorgesehenen Betriebsdauer noch eine genügend hohe Entstickungsrate zu erreichen. Bisherige Katalysatoren benötigen eine grosse Reservekapazität, weshalb diese grosse und entsprechend teuer ausgestaltet waren. Ein weiterer Vorteil des erfindungsgemässen Verfahrens ist darin zu sehen, dass sich die Lebensdauer des Katalysators dadurch verlängern lässt, dass bei verminderter Katalysatorwirksamkeit eine verstärkte nichtkatalytische Entstickung durchgeführt wird, in dem mehr Ammoniak eingedüst wird. Dadurch ist es möglich den Ersatz des Katalysators hinauszuzögern.

Das erfindungsgemässe Verfahren weist den weiteren Vorteil auf, dass eine optimale Entstickung auch bei sich ändernden Rauchgastemperaturen gewährleistet ist. Es ist bekannt, dass die Temperatur des Rauchgases nach dem Kessel variiert, bedingt durch die Verschmutzung des Kessels. In einem gereinigten Kessel wird dem Rauchgas mehr Wärme entzogen als in einem verschmutzen Kessel. Die Temperatur des Rauchgases beeinflusst die Umsetzungsrate des Katalysators. Durch die nichtkatalytische Entstickung wirken sich durch die Temperatur des Rauchgases bedingte Änderungen der Umsetzungsrate des Katalysators nur noch geringfügig auf die Entstickung am Katalysator aus.

Somit weist das erfindungsgemässe Verfahren der Kombination von nichtkatalytischer und katalytischer Entstickung die Vorteile auf,:
- dass der Katalysator-Filter kleiner und kompakter gebaut werden kann,
- dass die Lebensdauer des Katalysators verlängerbar ist durch den Ausgleich der reduzierten Wirksamkeit des Katalysators mit einer erhöhten nichtkatalytischen Entstickung,
- dass Änderungen der Rauchgastemperatur einen geringeren Einfluss auf die Umsetzrate am Katalysator bewirken,
- und dass die gesamte Entstickung kostengünstiger zu realisieren ist. Die Verwendung einer Katalysator-Filterkerze weist den Vorteil auf, dass in derselben Vorrichtung und in demselben Verfahrensschritt sowohl eine Entstaubung als auch eine Entstickung des Rauchgases stattfindet.

Ein weiterer Vorteil des erfindungsgemässen Verfahrens ist darin zu sehen, dass eine geringe Dioxinbildung erfolgt. Einerseits wird die Dioxinbildung in den Abgasen sowie in der Flugasche durch das Einblasen von Ammoniak in die Abgase unterdrückt. Zudem erfolgt bei vorhandenem Filterelement eine Staubabscheidung bei relativ tiefen Temperaturen, weshalb im abgeschiedenen Staub kaum Dioxine gebildet werden. Zudem zerstört der katalytisch wirkende Filter Dioxine. Mit einer dem Katalysatorelement nachfolgenden Restadsorption durch Aktivkohlezugabe vor oder in einer Nassabgasreinigung werden weiter ev. noch vorhandene Dioxine entfernt. Die mit dem erfindungsgemässen Verfahren gereinigten Abgase einer Müllverbrennung weisen daher sehr geringe Dioxinwerte auf.

Ein weiterer Vorteil des erfindungsgemässen Verfahrens ist darin zu sehen, dass zur Entstickung der Abgase, im Vergleich zu einem rein nichtkatalytischen Verfahren (SNCR-Verfahren), weniger Ammoniak erforderlich ist. Um einen grossen Anteil der Stickoxide zu reduzieren ist beim nichtkatalytischen Verfahren (SNCR-Verfahren) immer ein Ammoniaküberschuss erforderlich. Ein gewisser Ammoniak-Schlupf lässt sich nicht verhindern.

Als Reduktionsmittel eignet sich nebst Ammoniak auch ammoniakhaltige Substanzen oder Amine, gelöste Ammoniumsalze oder Ammoniumchlorid-Lösungen. Das Ammoniak kann gasförmig oder in einer wässrigen Lösung, insbesondere tröpfchenförmig, den Abgasen zugeführt werden.

In einer vorteilhaften Ausgestaltung des Verfahrens wird die Zugabe des Reduktionsmittels derart geregelt, dass gesamthaft ein minimaler Ammoniak-Verbrauch und ein minimaler Ammoniak-Schlupf resultiert, was bezüglich der Umweltbelastung eine optimale Entstickung darstellt.

In einer vorteilhaften Ausgestaltung des Verfahrens wird den Abgasen nach dem Katalysatorelement Aktivkohle zugegeben, um letzte Spuren von chlorierten Aromaten oder metallischem Quecksilber zu binden.

In einer weiteren, vorteilhaften Ausgestaltung des Verfahrens werden die Abgase nach dem Katalysatorelement einer Nass-Abgasreinigung unterzogen, um saure Schadstoffe wie SO₂ oder HCl zu entfernen.

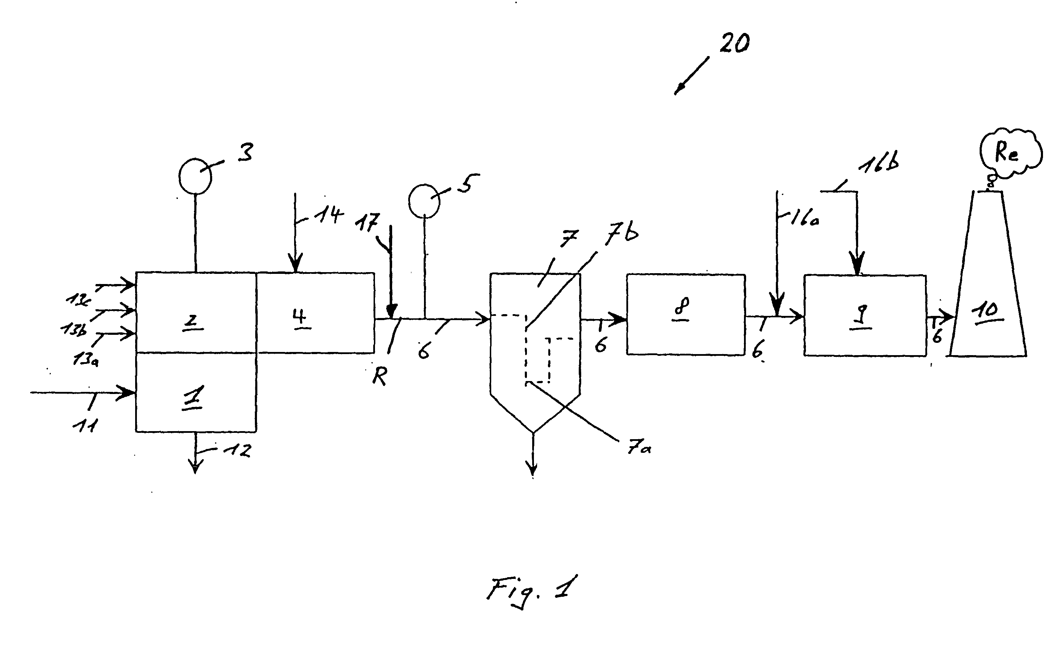

Das erfindungsgemässe Verfahren weist den Vorteil auf, dass die Abgase nach dem Austritt aus der Nass-Abgasreinigung nationale Vorschriften bezüglich Emissionswerte, wie z.B. die in der deutschen 17. BlmSch vorgeschriebenen Werte, erfüllen, so dass die Abgase ohne die bisher notwendige Nachreinigungsstufe, z.B. ausgestaltet als ein Gewebefilter mit Adsorbensdosierung oder einem Koks-Festbett, über den Kamin abführbar sind. Das erfindungsgemässe Verfahren wird mit dem in Fig. 1 schematisch dargestellten Ausführungsbeispiel im Detail beschrieben.

Die Müllverwertungsanlage 20 gemäss Fig. 1 weist eine Feuerung 1 zum Verbrennen von Müll 11 sowie eine der Feuerung 1 nachgeordnete Reinigungsvorrichtung für die Abgase auf. Aus dem unter Luftzugabe verbrannten Müll 11 entstehen eine Schlacke 12 sowie Verbrennungsabgase R beziehungsweise Abgase R, welche, nach dem Durchlaufen verschiedener Stufen und über Leitungen 6 einem Kamin 10 zugeführt werden, welches die gereinigten Abgase R als Reingase Re in die Atmosphäre entlässt.

Die Abgase R werden nach der Feuerung 1 einer Nachbrennkammer 2 zugeleitet, in welche zur nichtkatalytischen Entstickung der Abgase R ein Reduktionsmittel, enthaltend Ammoniak oder Ammoniak abspaltende Verbindungen wie ammoniakhaltige Substanzen, Amine oder aminhaltige Substanzen, eingedüst wird. Das Reduktionsmittel wird über Zuleitungen 13a,13b,13c an derjenigen Stelle in die Nachbrennkammer 2 eingedüst, an welcher die Abgastemperatur zwischen 700 und 900 °C und vorzugsweise bei etwa 850°C liegt. Die Zuleitungen 13a,13b,13c sind an unterschiedlichen Stellen in der Nachbrennkammer 2 angeordnet, wobei eine Temperaturmessvorrichtung 3 die Temperatur in der Nachbrennkammer 2 erfasst und eine nicht dargestellte Regelvorrichtung die Zugabe des Reduktionsmittels derart den unterschiedlich angeordneten Zuleitungen 13a,13b,13c zuführt, dass das Reduktionsmittel im bevorzugten Temperaturbereich eingedüst wird.

Die Nachbrennkammer 2 ist derart ausgelegt, dass die Abgase R insgesamt etwa 2 Sekunden darin verweilen.

Nach dieser nichtkatalytischen Entstickung werden die Abgase R einem Kessel 4 zugeleitet und darin auf eine Temperatur von unter 350 °C, vorzugsweise auf 200 bis 350 °C abgekühlt. Zudem wird den Abgasen R im Kessel 4 über eine Zuleitung 14 nochmals Reduktionsmittel eingedüst, wobei die Düsen derart im Kessel 4 angeordnet sind, dass die Temperatur der Abgase an der Eindüsstelle in jedem Betriebszustand unter 850°C liegt. Die Abgase R werden nach dem Kessel 4 einem Katalysatorelement 7 zugeführt, welches ein Filterelement 7b mit Filterkerzen 7a aus einem keramischen Trägermaterial umfasst, welche mit katalytisch aktiven Substanzen beschichtet sind, um die Reduktion von Stickoxiden zu katalysieren. Als katalytisch wirksame Substanzen werden Oxide und Salze der Elemente mit den Ordnungszahlen 23 bis 30 sowie des Wolframs oder Molybdäns verwendet. Dieses Katalysatorelement 7 mit Filter 7b erlaubt eine Entstaubung, und auf Grund des in den Abgasen R vorhandenen Ammoniaks, auch eine Entstickung der Abgase R. Zudem erfolgt im Katalysatorelement 7 eine Zerstörung von gasförmigen, polychlorierten Aromaten wie zum Beispiel PCDD.

Das Katalysatorelement 7 kann auch ohne Filterwirkung ausgestaltet sein, so dass in einem sogenannten High-Dust-Verfahren die Abgase R ohne eine vorherige Entstaubung das Katalysatorelement 7 passieren. Das Katalysatorelement muss dabei derart ausgestaltet sein, dass es über entsprechend weite freie Strömungskanäle für die Abgase R verfügt, um Verstopfungen zu vermeiden.

Dem Katalysatorelement 7 kann eine Wärmeentzugsvorrichtung 8 nachgeschaltet werden, welche den Abgasen R die noch vorhandene Restwärme entzieht und die Abgase R auf bis zu 160°C abkühlt. Anschliessend ist eine Nass-Abgasreinigungsvorrichtung 9 nachgeschaltet, welche die in den Abgasen R enthaltenen sauren Schadstoffe wie SO₂ oder HCl absorbiert. Um letzte Spuren von chlorierten Aromaten oder metallischem Quecksilber zu binden, kann es sich als vorteilhaft erweisen, Aktivkohle über Zuleitungen 16a,16b direkt in den Abgasstrom R oder in die Nass-Abgasreinigungsvorrichtung 9 einzugeben.

Die Menge an eingedüstem Ammoniak kann mit unterschiedlichen Strategien geregelt werden. Das Eindüsen kann beispielsweise wie folgt erfolgen: Das Ammoniak wird in einer derartigen Menge über die Zuleitungen 13 eingedüst, dass eine Teilentstickung der Abgase R auf etwa 100 ppm NO, gemessen mit der Messvorrichtung 5, erreicht wird. Die Temperaturverteilung in der Nachbrennkammer 2 wird gemessen und das Ammoniak durch entsprechendes Schalten auf eine der drei Zuleitungen 13a, 13b, 13c an derjenigen Stelle eingedüst, in welcher die Temperatur am nächsten bei der optimalen Temperatur von 850 ± 50 °C liegt. Zusätzlich wird die Zugabe von Ammoniak in die Nachbrennkammer 2 derart begrenzt, dass maximal die 1,5 ± 0,5-fache Menge Ammoniak, bezogen auf den NO-Gehalt im Rohgas der Nachbrennkammer 2, eingedüst wird. Die Begrenzung kann auch als maximale Ammoniakmenge fest eingestellt werden oder von der Temperaturmessung in der Nachbrennkammer 2 abhängig gemacht werden.

Durch die zweite Ammoniakzugabe über die Zuleitung 14 wird der Ammoniakgehalt der Abgase vor dem Katalysatorelement 7 soweit erhöht, dass die Abgase vor dem Katalysatorelement 7 eine stöchiometrische Menge Ammoniak bezogen auf die Stickoxide, gemessen mit der Messvorrichtung 5, aufweisen. Um einen minimalen Ammoniakschlupf zu erreichen, kann der Stöchiometriefaktor auch kleiner als eins sein, beispielsweise die 0.66-fache stöchiometrische Menge.

Mit einem derartigen Regelungskonzept kann eine Restentstickung der Abgase R von beispielsweise kleiner 30 ppm NO, bei einem Restschlupf an Ammoniak von kleiner 10 mg NH₃/m³ erreicht werden.

Die zweite Ammoniakeindüsung über die Zuleitung 14 kann auch der Messvorrichtung 5 nachfolgend angeordnet sein.

Nebst der dargestellen Messvorrichtung 5 können weitere Messvorrichtungen zum Messen der Konzentration von Ammoniak und Stickoxid angeordnet sein, zum Beispiel in der Nachbrennkammer 2, um die Zugabe von Reduktionsmittel noch kontrollierter zu steuern.

Daneben kann die üblicherweise vor dem Kamin angeordnete Emissionsmessung verwendet werden, um beispielsweise einen abnehmenden Katalysatorwirkungsgrad durch eine erhöhte Entstickung in der Nachbrennkammer 2 auszugleichen.

In einem weiteren Ausführungsbeispiel wird dem Rauchgas R vor dem Katalysator-Filter 7 ein trockenes Absorptionsmittel zugeführt, wie dies durch den Pfeil 17 dargestellt ist. Als Absorptionsmittel sind alkalische Absorptionsmittel geeignet, d.h. Alkalien, Alkaliverbindungen oder beispielsweise Erdalkaliverbindungen. Bei diesem Ausführungsbeispiel ist der Katalysator-Filter 7 besonders vorteilhaft als ein Filter mit interner Staubrezirkulation, wie dies zum Beispiel in der Druckschrift EP 476 300 A1 offenbart ist, ausgestaltet. Im Katalysator-Filter 7 laufen die folgenden Prozesse ab:
- Entstaubung des Rauchgases R,
- Rest-Entstickung des Rauchgases R durch den Katalysator,
- Absorption von sauren Bestandteilen des Rauchgases R wie HCL, HF oder SO2 am alkalischen Absorptionsmittel wie CaO oder NaHC03,
- Adsorption von Quecksilber und Dioxinen an z.B. schwefeldotierter Aktivkohle.

Dadurch kann das Rauchgas R auf sehr kostengünstige Weise umfassend gereinigt werden.

## Patentansprüche

1. Verfahren zur Entstickung von Verbrennungsabgasen, einer Müllverbrennungsanlage, bei welcher der Verbrennungsvorgang zweistufig abläuft, mit einer Hauptverbrennung sowie einer Nachverbrennung, wobei den Verbrennungsabgasen in der Nachverbrennung ein Reduktionsmittel, das Ammoniak ist oder bei Reaktionstemperatur Ammoniak abgibt, bei einer Brenngastemperatur von 700 bis 900° C zugegeben wird, und wobei die dadurch erzeugten ammoniakhaltigen Abgase nach der Nachverbrennung auf eine Temperatur von 200 bis 350° C abgekühlt werden, den abgekühlten ammoniakhaltigen Abgasen nochmals das Reduktionsmittel zugeführt wird, den Abgasen vor einem Katalysatorelement ein alkalisches Absorptionsmittel zugegeben wird, und die derart behandelten Verbrennungsabgase anschliessend dem Katalysatorelement zugeleitet werden, um die Reduktion der restlichen Stickoxyde zu katalysieren.

2. Verfahren nach Anspruch 1, **dadurch gekennzeichnet, dass** das Katalysatorelement zudem ein Filterelement umfasst, damit die Abgase entstaubt werden, und diese Elemente insbesondere als eine Katalysator-Filterkerze ausgestaltet sind.

3. Verfahren nach Anspruch 1 oder 2, **dadurch gekennzeichnet, dass** das Reduktionsmittel in einer maximal zweifachen stöchiometrischen Menge, bezogen auf die Stickoxide, der Nachverbrennung zugegeben wird.

4. Verfahren nach einem der vorhergehenden Ansprüche, **dadurch gekennzeichnet, dass** das Reduktionsmittel bei einer Brenngastemperatur von etwa 850 °C, der Nachverbrennung zugeführt wird.

5. Verfahren nach einem der vorhergehenden Ansprüche, **dadurch gekennzeichnet, dass** das Reduktionsmittel in einer derartigen Menge zugeführt wird, dass die Abgase unmittelbar vor dem Katalysatorelement maximal eine stöchiometrische Menge Ammoniak bezogen auf die Stickoxide aufweisen, insbesondere maximal die 0.66-fache stöchiometrische Menge.

6. Verfahren nach einem der vorhergehenden Ansprüche, **dadurch gekennzeichnet, dass** den Abgasen nach dem Katalysatorelement Aktivkohle zugegeben wird.

7. Verfahren nach einem der vorhergehenden Ansprüche, **dadurch gekennzeichnet, dass** die Abgase nach dem Katalysatorelement einer Nass-Abgasreinigung unterzogen werden.

8. Verfahren nach einem der vorhergehenden Ansprüche, **dadurch gekennzeichnet, dass** Ammoniak als Reduktionsmittel verwendet wird und gasförmig oder in wässriger Lösung, vorzugsweise tröpfchenförmig, zugeführt wird.

## Revendications

1. Procédé pour dénitrifier les gaz de sortie d'incinération dans une installation d'incinération de déchets dans laquelle l'opération d'incinération se déroule en deux étapes avec une incinération principale ainsi qu'une incinération finale, un agent de réduction qui est de l'ammoniac ou qui dégage de l'ammoniac à la température de réaction étant apporté aux gaz de combustion de l'incinération finale à une température de gaz de combustion comprise entre 700 et 900°C, et les gaz de sortie ainsi produits qui contiennent de l'ammoniac étant refroidis à une température de 200 à 350°C après l'incinération finale, l'agent de réduction étant apporté une nouvelle fois aux gaz de sortie qui contiennent de l'ammoniac, un agent alcalin d'absorption étant ajouté aux gaz d'effluent en amont d'un élément de catalyse et les gaz d'incinération ainsi traités étant ensuite conduits à l'élément de catalyse pour catalyser la réduction des oxydes d'azote résiduels.

2. Procédé selon la revendication 1, **caractérisé en ce que** l'élément de catalyse comprend en outre un élément de filtre qui débarrasse les gaz de sortie de leurs poussières et **en ce que** ces éléments sont en particulier configurés comme bougie filtrante à catalyseur.

3. Procédé selon la revendication 1 ou 2, **caractérisé en ce que** l'agent de réduction est ajouté à l'incinération finale en quantité au plus deux fois stoechiométrique par rapport aux oxydes d'azote.

4. Procédé selon l'une des revendications précédentes, **caractérisé en ce que** l'agent de réduction est apporté à l'incinération finale à une température des gaz de combustion d'environ 850°C.

5. Procédé selon l'une des revendications précédentes, **caractérisé en ce que** l'agent de réduction est amené en une quantité telle que, immédiatement avant l'élément de catalyseur, les gaz de sortie présentent une quantité d'ammoniac au plus stoechiométrique par rapport aux oxydes d'azote et en particulier d'au plus 0,66 fois la quantité stoechiométrique.

6. Procédé selon l'une des revendications précédentes, **caractérisé en ce que** du charbon actif est apporté aux gaz de sortie en aval de l'élément de catalyse.

7. Procédé selon l'une des revendications précédentes, **caractérisé en ce que** les gaz de sortie subissent une épuration par voie humide en aval de l'élément de catalyse.

8. Procédé selon l'une des revendications précédentes, **caractérisé en ce que** l'on utilise comme agent de réduction de l'ammoniac apporté sous forme gazeuse ou en solution aqueuse et de préférence sous forme de gouttelettes.

## Claims

1. Process for deNOxing combustion off gases of an incineration plant, in which the combustion process takes place in two stages, with main combustion and post-combustion, a reducing agent, which is ammonia or gives off ammonia at the reaction temperature, being added to the combustion off gases in the post-combustion at a combustion gas temperature of 700 to 900°C, and the ammonia-containing off gases produced in this way being cooled downstream of the post-combustion to a temperature of 200 to 350°C, the reducing agent being once more added to the cooled ammonia-containing off gases, an alkali absorbent being added to the off gases upstream of a catalyst element, and the combustion off gases treated in this way being subsequently fed to the catalyst element in order to catalyse the reduction of the residual nitrogen oxides.

2. Process according to Claim 1, **characterized in that** the catalyst element additionally comprises a filter element so that dust is removed from the off gases, and these elements are, in particular, designed as a catalyst/filter cartridge.

3. Process according to Claim 1 or 2, **characterized in that** the reducing agent is added to the post-combustion in an at most double stoichiometric amount, relative to the nitrogen oxides.

4. Process according to one of the preceding claims, **characterized in that** the reducing agent is fed to the post- combustion at a combusted gas temperature of about 850°C.

5. Process according to one of the preceding claims, **characterized in that** the reducing agent is supplied in an amount such that, directly upstream of the catalyst element, the off gasses have at most a stoichiometric amount of ammonia relative to the nitrogen oxides, in particular at most 0.66 times the stoichiometric amount.

6. Process according to one of the preceding claims, **characterized in that** active carbon is added to the off gases downstream of the catalyst element.

7. Process according to one of the preceding claims, **characterized in that** the off gases are subjected to wet off gas cleaning downstream of the catalyst element.

8. Process according to one of the preceding claims, **characterized in that** ammonia is used as the reducing agent and is supplied in the form of gas or in aqueous solution, preferably in the form of droplets.
